# EUROPÄISCHE PATENTSCHRIFT

(11) **EP 2 841 811 B1**
(45) Veröffentlichungstag und Bekanntmachung des Hinweises auf die Patenterteilung: **27.04.2016**
(21) Anmeldenummer: 13711861.8
(22) Anmeldetag: 13.03.2013
(51) Int. Cl.: F16H 3/66, F16H 3/44, B60K 6/365, B60K 6/48, B60K 6/547

(54) **MEHRSTUFENGETRIEBE**
MULTI-STAGE TRANSMISSION
BOÎTE DE VITESSES À PLUSIEURS ÉTAGES

(30) Priorität: 27.04.2012 DE 102012207017
(43) Veröffentlichungstag der Anmeldung: 04.03.2015
(73) Patentinhaber: ZF Friedrichshafen AG, 80846 Friedrichshafen (DE)
(72) Erfinder: ZIEMER, Peter, 88069 Tettnang (DE); BECK, Stefan, 88097 Eriskirch (DE); WEHLEN, Timo, 88045 Friedrichshafen (DE)
(86) Internationale Anmeldenummer: PCT/EP2013/055056
(87) Internationale Veröffentlichungsnummer: WO 2013/159987

(56) Entgegenhaltungen:
- DE-A1-102008 000 429
- DE-A1-102010 005 737
- DE-A1-102011 106 551

## Beschreibung

Die Erfindung betrifft ein zweistufiges Mehrstufengetriebe in Planetenbauweise, insbesondere für ein Kraftfahrzeug, umfassend:
- einen ersten Planetenradsatz mit einem inneren Sonnenrad, mit dem inneren Sonnenrad in Eingriff stehende innere Planetenräder, ein mit den inneren Planetenrädern in Eingriff stehendes inneres Hohlrad, ein mit dem inneren Hohlrad drehfest verbundenes äußeres Sonnenrad, mit dem äußeren Sonnenrad in Eingriff stehende äußere Planetenräder und ein mit den äußeren Planetenrädern in Eingriff stehendes äußeres Hohlrad, sowie einen Steg, auf dem die inneren Planetenräder und die äußeren Planetenräder gelagert sind, und
- einen zweiten Planetenradsatz mit einem Sonnenrad, mit dem Sonnenrad in Eingriff stehende innere Planetenräder mit den inneren Planetenrädern kämmende äußere Planetenräder und ein mit den äußeren Planetenrädern in Eingriff stehendes Hohlrad, sowie einen Steg, auf dem die Planetenräder gelagert sind.

Derartige Mehrstufengetriebe kommen vorzugsweise als Automatikgetriebe von Kraftfahrzeugen zum Einsatz, wobei der in der jeweiligen Gangstufe wirksame Leistungsfluss innerhalb der Planetensätze durch eine gezielte Betätigung der Schaltelemente definiert wird. Dabei sind die Planetensätze bei einem Automatikgetriebe üblicherweise zudem mit einem einer Schlupfwirkung unterliegenden und wahlweise mit einer Überbrückungskupplung versehenen Anfahrelement verbunden, wie beispielsweise etwa einem hydrodynamischen Drehmomentwandler oder einer Strömungskupplung.

Ein zweistufiges Mehrstufengetriebe der eingangs genannten Art, bei dem ein erster Planetenradsatz zwei radial ineinander geschachtelte Getriebe-Substufen umfasst, welcher mit einem zweiten Planetenradsatz herkömmlicher Bauart gekoppelt ist, ist prinzipiell aus der US 5,429,557 A bekannt. Aus der DE 10 2011 106 551 A1 ist zudem ein mehrstufiges Getriebe mit den Merkmalen des Oberbegriffs von Anspruch 1 bekannt, bei dem ein gestapelter Planetenradsatz mit zwei Planetenradsätzen herkömmlicher Bauart gekoppelt ist.

Nachteilig an dem bekannten Mehrstufengetriebe ist dessen Verschaltung der einzelnen Bauteile, insbesondere ist die Kopplung der beiden Radsätze vergleichsweise komplex.

Aufgabe der Erfindung ist daher, ein verbessertes Mehrstufengetriebe anzugeben, insbesondere soll die Kopplung zwischen den beiden Planetenradsätzen vereinfacht werden.

Die Aufgabe der Erfindung wird durch ein zweistufiges Mehrstufengetriebe der eingangs genannten Art gelöst, bei dem
- das Sonnenrad des ersten Planetenradsatzes über eine erste Kupplung mit einem Antrieb koppelbar ist,
- der Steg des zweiten Planetenradsatzes über eine erste Bremse mit dem Gehäuse koppelbar ist,
- das Sonnenrad des zweiten Planetenradsatzes drehfest mit dem Antrieb verbunden ist und das Hohlrad des zweiten Planetenradsatzes drehfest mit dem inneren Hohlrad und dem äußeren Sonnenrad des ersten Planetenradsatzes verbunden ist,
- das innere Hohlrad und das äußere Sonnenrad des ersten Planetenradsatzes über eine zweite Bremse mit dem Gehäuse koppelbar ist,
- der Steg des ersten Planetenradsatzes über eine dritte Bremse mit dem Gehäuse koppelbar ist,
- der Steg des ersten Planetenradsatzes über eine zweite Kupplung mit dem Antrieb koppelbar ist und
- das äußere Hohlrad des ersten Planetenradsatzes drehfest mit einem Abtrieb verbunden ist.

Durch die gewählte Anordnung wird erreicht, dass die Schaltelemente, also die getriebeseitigen Bremsen und Kupplungen, von außen gut erreichbar sind. So können die Aktuatoren, wie beispielweise Elektromotoren, hydraulische Ventile, hydraulische Pumpen und Ähnliche in der Nähe der Schaltelemente angeordnet sein, wodurch mechanische und/oder hydraulische Verluste verringert werden und eine geringere Energie für die Betätigung des Schaltelementes notwendig sein kann. Auch kann weniger Energie notwendig sein, um das Schaltelement in seinem jeweils aktuellen Betriebszustand, also offen oder geschlossen, zu halten, zum Beispiel da durch kurze Leitungen auch die Druckverluste geringer sind. Auch ist es so möglich, Schaltelemente an dem Gehäuse und somit zumindest teilweise drehfest anzuordnen, wodurch Dichtungen, welche eine stehende Leitung mit einer drehenden Leitung verbinden, ganz oder teilweise vermieden werden können.

Auch vereinfacht die räumliche Anordnung der gut erreichbaren Schaltelemente das Ersetzen der üblichen hydraulisch betätigten Lamellenkupplungen oder - bremsen durch zum Beispiel elektro-mechanisch oder elektro-hydraulisch betätigte Bremsen und Kupplungen, die vergleichsweise einfach bedarfsgerecht ansteuerbar sind. Gut erreichbare Schaltelemente sind einerseits Bremsen, welche eine Welle mit dem Gehäuse drehfest koppeln, aber auch Schaltelemente an außen liegenden Wellen des Mehrstufengetriebes, vorzugsweise an An- oder Abtriebswelle, denen zur Betätigung benötigten Hydraulikfluid vergleichsweise einfach zugeführt werden kann.

Neben dieser Eigenschaft weist das genannte Mehrstufengetriebe gleichzeitig auch noch einen guten Verzahnungswirkungsgrad, lediglich kleine Belastungen der Bauteile, insbesondere niedrige Planetensatz- und Schaltelementmomente, niedrige Absolut- und Relativdrehzahlen sowie geringen Bauaufwand auf. Letzteres ermöglicht die Realisierung des Mehrstufengetriebes mit nur geringem Gewicht und niedrigen Kosten. Im Besonderen ist die Baulänge des vorgestellten Getriebes äußerst kurz. Bevorzugt wird das Mehrstufengetriebe daher als Antrieb in Front-Quer Bauweise realisiert. Insbesondere kann das Getriebe aufgrund der kurzen Baulänge auch für Hybridantriebe (z.B. Verbrennungsmotor und elektrische Maschine) eingesetzt werden. Schließlich ermöglicht das Mehrstufengetriebe auch eine gute Übersetzungsreihe, also eine gut brauchbare Abstufung der Gänge.

Allgemein umfasst das genannte Mehrstufengetriebe zwei Planetenradsätze, zwei Kupplungen und drei Bremsen. Durch Betätigung von jeweils zwei Schaltelementen (Bremsen und/oder Kupplungen lassen sich sechs Vorwärtsgänge und ein Rückwärtsgang schalten.

Als Anfahrelemente können ein hydrodynamischer Drehmomentwandler, eine hydrodynamische Kupplung, eine zusätzliche Anfahrkupplung, eine integrierte Anfahrkupplung oder -bremse und/oder eine zusätzliche E-Maschine dienen.

Die geometrische Lage (Reihenfolge) der einzelnen Radsätze und Schaltelemente ist frei wählbar, solange es die Bindbarkeit der Elemente zulässt. So können einzelne Elemente beliebig in ihrer Lage verschoben werden.

Weitere vorteilhafte Varianten des Mehrstufengetriebes ergeben sich aus den Unteransprüchen sowie aus der Beschreibung in Zusammenschau mit den Figuren. Zum besseren Verständnis der Erfindung wird diese anhand der nachfolgenden Figuren näher erläutert. Es zeigen jeweils in stark schematisch vereinfachter Darstellung:
Fig. 1 eine erste schematisch dargestellte Variante eines erfindungsgemäßen Mehrstufengetriebes und
Fig. 2 einen Querschnitt durch ein erfindungsgemäßes Mehrstufengetriebe.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

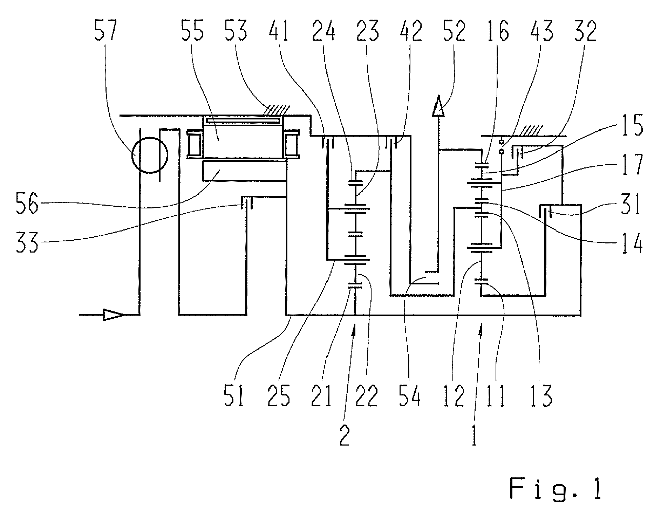

Die Fig. 1 zeigt eine erste schematisch dargestellte Variante eines erfindungsgemäßen Mehrstufengetriebes mit zwei Planetenradsätzen.

Der erste Planetenradsatz umfasst ein inneres Sonnenrad 11, mit dem inneren Sonnenrad 11 in Eingriff stehende innere Planetenräder 12, ein mit den inneren Planetenrädern 12 in Eingriff stehendes inneres Hohlrad 13, ein mit dem inneren Hohlrad 13 drehfest verbundenes äußeres Sonnenrad 14, mit dem äußeren Sonnenrad 14 in Eingriff stehende äußere Planetenräder 15 und ein mit den äußeren Planetenrädern 15 in Eingriff stehendes äußeres Hohlrad 16, sowie einen Steg 17, auf dem die inneren Planetenräder 12 und die äußeren Planetenräder 15 gelagert sind.

In diesem Beispiel ist der zweite Planetenradsatz 2 als Plus-Radsatz ausgebildet. Dieser umfasst somit ein Sonnenrad 21, mit dem Sonnenrad 21 in Eingriff stehende innere Planetenräder 22, mit den inneren Planetenrädern 22 in Eingriff stehende äußere Planetenräder 23, welche mit dem Hohlrad 24 in Eingriff stehen, sowie einen Steg 25, auf dem die Planetenräder 22, 23 gelagert sind. Durch die gewählte Bauweise ergibt sich vorteilhaft eine vergleichsweise geringe Drehzahl der Planetenräder 22 und 23 des zweiten Planetenradsatzes.

Im Mehrstufengetriebe nach Fig. 1 ist
- das Sonnenrad 11 des ersten Planetenradsatzes 1 über eine erste Kupplung 31 mit einem Antrieb 51 koppelbar,
- der Steg 25 des zweiten Planetenradsatzes 2 über eine erste Bremse 41 mit dem Gehäuse 53 koppelbar,
- das Sonnenrad 21 des zweiten Planetenradsatzes 2 drehfest mit dem Antrieb 51 verbunden und das Hohlrad 24 des zweiten Planetenradsatzes 2 drehfest mit dem inneren Hohlrad 13 und dem äußeren Sonnenrad 14 des ersten Planetenradsatzes 1 verbunden,
- das innere Hohlrad 13 und das äußere Sonnenrad 14 des ersten Planetenradsatzes 1 über eine zweite Bremse 42 mit dem Gehäuse 53 koppelbar,
- der Steg 17 des ersten Planetenradsatzes 1 über eine dritte Bremse 43 mit dem Gehäuse 53 koppelbar,
- der Steg 17 des ersten Planetenradsatzes 1 über eine zweite Kupplung 32 mit dem Antrieb 51 koppelbar und
- das äußere Hohlrad 16 des ersten Planetenradsatzes 1 drehfest mit einem Abtrieb 52 verbunden.

In der Fig. 1 sind weiterhin ein zwischen dem ersten Planetenradsatz 1 und dem zweiten Planetenradsatz 2 angeordnetes Lager 54, ein mit dem Gehäuse 53 des Mehrstufengetriebes drehfest verbundener Stator 55 einer elektrischen Maschine, ein mit dem Antrieb 51 drehfest verbundener Rotor 56 der genannten elektrischen Maschine, sowie ein in den Antriebsstrang geschalter optionaler Schwingungsdämpfer 57 dargestellt. Schließlich ist auch noch eine dritte Kupplung 33 vorgesehen, um die elektrische Maschine 55, 56 oder eine mit dem Schwingungsdämpfer 57 verbundene Verbrennungskraftmaschine (nicht dargestellt) wahlweise zur Erzeugung einer Bewegung zu nutzen. Selbstverständlich kann die Kupplung 33 entfallen, wenn antriebsseitig nur die elektrische Maschine 55, 56 vorgesehen wird. Generell kann die Kupplung 33 auch bei Verwendung einer Verbrennungskraftmaschine entfallen wie später noch erläutert wird.

Folgende Gänge sind durch Betätigen der angegebenen Elemente schaltbar:
- ein erster Gang durch erste Kupplung 31 und dritte Bremse 43,
- ein zweiter Gang durch erste Kupplung 31 und zweite Bremse 42,
- ein dritter Gang durch erste Kupplung 31 und erste Bremse 41,
- ein vierter Gang durch erste Kupplung 31 und zweite Kupplung 32,
- ein fünfter Gang durch zweite Kupplung 32 und erste Bremse 41,
- ein sechster Gang durch zweite Kupplung 32 und zweite Bremse 42 und
- ein Rückwärtsgang durch erste Bremse 41 und dritte Bremse 43,
wobei die jeweils nicht genannten Elemente unbetätigt beziehungsweise geöffnet sind.

In einer besonders bevorzugten Ausführungsform des Mehrstufengetriebes ist das Übersetzungsverhältnis:
- des ersten Planetenradsatzes 1 zwischen innerem Sonnenrad 11 und innerem Hohlrad 12 gleich -2,5 und
- des ersten Planetenradsatzes 1 zwischen äußerem Sonnenrad 11 und äußerem Hohlrad 12 gleich -1,46 und
- des zweiten Planetenradsatzes 2 zwischen Sonnenrad 41 und Hohlrad 42 gleich +2,5.
Auf diese Weise ergibt sich eine besonders vorteilhafte Stufung der Gänge.

Alle Schaltelemente können prinzipiell reib- oder formschlüssig wirken. Vorteilhaft ist es jedoch, wenn wie in diesem Beispiel dargestellt die dritte Bremse 43 als Klauenbremse und die erste Kupplung 31 und die erste Bremse 41 als Reibschaltelemente ausgeführt sind. In diesem Zusammenhang ist es auch von Vorteil, wenn die erste Kupplung 31 und die erste Bremse 41 als Anfahrelemente ausgebildet sind. Dadurch treten an der dritten Bremse 43 keine Reibungsverluste auf. Gleichzeitig kann ein Anfahrelement in Form einer gesonderten Kupplung 33, wie sie gewöhnlich verwendet wird, entfallen. Das Getriebe baut somit besonders kurz. Im Zusammenhang mit den oben angeführten Schaltstellungen wird die erste Kupplung 31 als Anfahrelement im 1. Gang und die erste Bremse 41 als Anfahrelement im Rückwärtsgang verwendet. Vorteilhaft ist der Stützfaktor (Verhältnis von Kupplungs- bzw. Bremsmoment zu Getriebeeingangsmoment) der ersten Kupplung 31 bei dieser Getriebeanordnung gleich 1 und der Stützfaktor der ersten Bremse 41 sogar <1.

Denkbar wäre aber beispielsweise auch, dass die dritte Bremse 43 als Reibschaltelement und die erste Kupplung 31 als Klauenkupplung ausgeführt sind. In diesem Zusammenhang ist es auch von Vorteil, wenn dritte Bremse 43 als Anfahrelement ausgebildet ist. Dadurch treten an der ersten Kupplung 31 keine Reibungsverluste auf. Gleichzeitig kann ein Anfahrelement in Form einer gesonderten Kupplung 33, wie sie gewöhnlich verwendet wird, wiederum entfallen. Das Getriebe baut somit auch in diesem Fall besonders kurz.

In beiden oben genannten Fällen ist der Einsatz von Klauenkupplungen bzw. Klauenbremsen natürlich nicht zwingend. Stattdessen ist auch der Einsatz von thermisch schwach belasteten Reibschaltelementen denkbar.

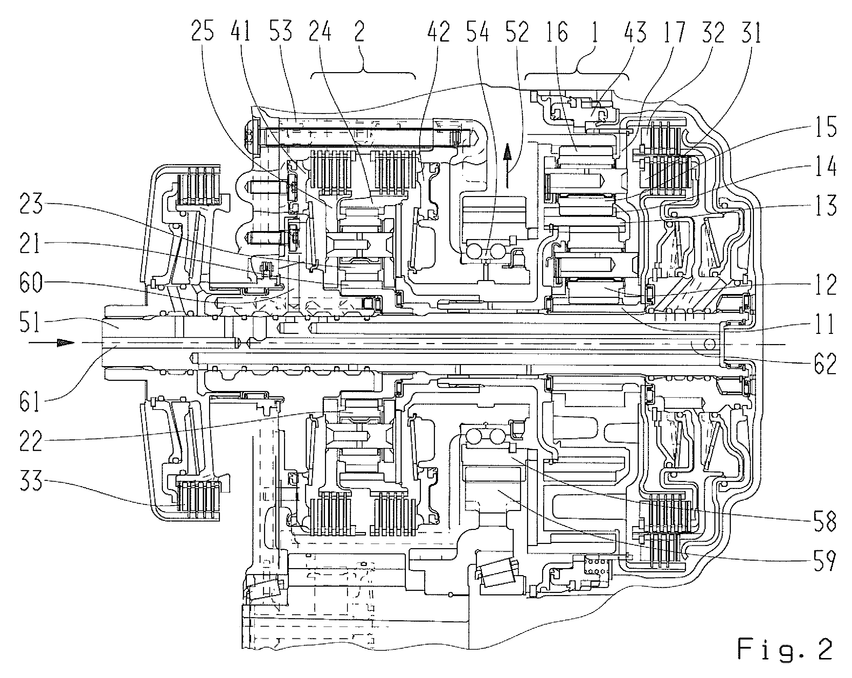

Fig. 2 zeigt nun einen Schnitt ein Mehrstufengetriebe, welches der in Fig. 1 schematisch dargestellten Ausführungsform entspricht.

In diesem Beispiel ist abtriebsseitig weiterhin eine Stirnrad-Getriebestufe vorgesehen. In Fig. 2 ist dazu das über das äußere Hohlrad 16 des ersten Radsatzes 1 angetriebene erste Stirnrad 58 zu sehen, welches mit dem zweiten Stirnrad 59 in Eingriff steht und welches auf dem Lager 54 gelagert ist. Bei dieser Bauform des Mehrstufengetriebes ergibt sich insbesondere der Vorteil, dass durch die Lagerung des ersten Stirnrads 58 auch das äußere Hohlrad 16 des ersten Radsatzes 1 axial gesichert ist. Des Weiteren können durch die gewählte Bauform auch das mit dem äußeren Sonnenrad 14 kombinierte innere Hohlrad 13 des ersten Radsatzes 1 und das Hohlrad 24 des zweiten Radsatzes 2 ohne großen Bauaufwand axial gesichert werden.

Besonders günstig ist es auch, wenn Anschlüsse 60 zu einer externen Ölversorgung des Getriebes wie in Fig. 2 dargestellt ausschließlich durch eine oder mehrere in der Antriebswelle 51 angeordnete und zur Antriebsseite geführte Bohrungen 61 und zur Abtriebsseite eine oder mehrere geführte Bohrungen 62 gebildet sind. Beispielsweise kann die Führung des Drucköls, Schmieröls und/oder Kühlöls über eine oder mehrere zur Antriebsseite geführte Bohrung(en) 61 sowie eine oder mehrere weitere Längsbohrung(en) 62 in der Antriebswelle 51 erfolgen. Dadurch können radiale Bohrungen auf der dem Antriebe abgewandten Seite, wie sie gewöhnlich verwendet werden, entfallen. Auf diese Weise kann also die Baulänge des Getriebes weiter reduziert werden.

### Bezugszeichen

- 1: erster Planetenradsatz
- 2: zweiter Planetenradsatz
- 11: inneres Sonnenrad des ersten Planetenradsatzes
- 12: innere Planetenräder des ersten Planetenradsatzes
- 13: inneres Hohlrad des ersten Planetenradsatzes
- 14: äußeres Sonnenrad des ersten Planetenradsatzes
- 15: äußere Planetenräder des ersten Planetenradsatzes
- 16: äußeres Hohlrad des ersten Planetenradsatzes
- 17: Steg des ersten Planetenradsatzes
- 21: Sonnenrad des zweiten Planetenradsatzes
- 22: innere Planetenräder des zweiten Planetenradsatzes
- 23: äußere Planetenräder des zweiten Planetenradsatzes
- 24: Hohlrad des zweiten Planetenradsatzes
- 25: Steg des zweiten Planetenradsatzes
- 31: erste Kupplung
- 32: zweite Kupplung
- 33: dritte Kupplung
- 41: erste Bremse
- 42: zweite Bremse
- 43: dritte Bremse
- 51: Antrieb/Antriebswelle
- 52: Abtrieb
- 53: Gehäuse
- 54: Lager
- 55: Stator elektrische Maschine
- 56: Rotor elektrische Maschine
- 57: Schwingungsdämpfer
- 58: erstes Stirnrad
- 59: zweites Stirnrad
- 60: Anschlüsse für Ölversorgung
- 61: Ölbohrung
- 62: Ölbohrung

## Patentansprüche

1. Mehrstufengetriebe mit zwei Getriebe-Radsätzen (1, 2), umfassend:
- einen ersten Planetenradsatz (1) mit einem inneren Sonnenrad (11), mit dem inneren Sonnenrad (11) in Eingriff stehende innere Planetenräder (12), ein mit den inneren Planetenrädern (12) in Eingriff stehendes inneres Hohlrad (13), ein mit dem inneren Hohlrad (13) drehfest verbundenes äußeres Sonnenrad (14), mit dem äußeren Sonnenrad (14) in Eingriff stehende äußere Planetenräder (15) und ein mit den äußeren Planetenrädern (15) in Eingriff stehendes äußeres Hohlrad (16), sowie einen Steg (17), auf dem die inneren Planetenräder (12) und die äußeren Planetenräder (15) gelagert sind, und
- einen zweiten Planetenradsatz (2) mit einem Sonnenrad (21), mit dem Sonnenrad (21) in Eingriff stehende innere Planetenräder (22), mit den inneren Planetenrädern (22) kämmende äußere Planetenräder (23) und ein mit den äußeren Planetenrädern (23) in Eingriff stehendes Hohlrad (24), sowie einen Steg (25), auf dem die Planetenräder (22, 23) gelagert sind,
- wobei das Sonnenrad (11) des ersten Planetenradsatzes (1) über eine erste Kupplung (31) mit einem Antrieb (51) koppelbar ist,
- wobei das Hohlrad (24) des zweiten Planetenradsatzes (2) drehfest mit dem inneren Hohlrad (13) und dem äußeren Sonnenrad (14) des ersten Planetenradsatzes (1) verbunden ist,
**dadurch gekennzeichnet, dass**
- der Steg (25) des zweiten Planetenradsatzes (2) über eine erste Bremse (41) mit dem Gehäuse (53) koppelbar ist,
- das Sonnenrad (21) des zweiten Planetenradsatzes (2) drehfest mit dem Antrieb (51) verbunden ist,
- das innere Hohlrad (13) und das äußere Sonnenrad (14) des ersten Planetenradsatzes (1) über eine zweite Bremse (42) mit dem Gehäuse (53) koppelbar ist,
- der Steg (17) des ersten Planetenradsatzes (1) über eine dritte Bremse (43) mit dem Gehäuse (53) koppelbar ist,
- der Steg (17) des ersten Planetenradsatzes (1) über eine zweite Kupplung (32) mit dem Antrieb (51) koppelbar ist und
- das äußere Hohlrad (16) des ersten Planetenradsatzes (1) drehfest mit einem Abtrieb (52) verbunden ist.

2. Mehrstufengetriebe nach Anspruch 1, **dadurch gekennzeichnet, dass** folgende Gänge durch Betätigen der angegebenen Elemente schaltbar sind:
- ein erster Gang durch erste Kupplung (31) und dritte Bremse (43),
- ein zweiter Gang durch erste Kupplung (31) und zweite Bremse (42),
- ein dritter Gang durch erste Kupplung (31) und erste Bremse (41),
- ein vierter Gang durch erste Kupplung (31) und zweite Kupplung (32),
- ein fünfter Gang durch zweite Kupplung (32) und erste Bremse (41),
- ein sechster Gang durch zweite Kupplung (32) und zweite Bremse (42) und
- ein Rückwärtsgang durch erste Bremse (41) und dritte Bremse (43),
wobei die jeweils nicht genannten Elemente unbetätigt beziehungsweise geöffnet sind.

3. Mehrstufengetriebe nach einem der Ansprüche 1 oder 2, **dadurch gekennzeichnet, dass** abtriebsseitig eine Stirnrad-Getriebestufe (58, 59) vorgesehen ist.

4. Mehrstufengetriebe nach einem der Ansprüche 1 bis 3, **dadurch gekennzeichnet, dass** die dritte Bremse (43) als Klauenbremse und die erste Kupplung (31) und die erste Bremse (41) als Reibschaltelemente ausgeführt sind.

5. Mehrstufengetriebe nach Anspruch 4, **dadurch gekennzeichnet, dass** die erste Kupplung (31) und die erste Bremse (41) als Anfahrelemente ausgebildet sind.

6. Mehrstufengetriebe nach einem der Ansprüche 1 bis 3, **dadurch gekennzeichnet, dass** die dritte Bremse (43) als Reibschaltelement und die erste Kupplung (31) als Klauenkupplung ausgeführt sind.

7. Mehrstufengetriebe nach Anspruch 6, **dadurch gekennzeichnet, dass** die dritte Bremse (43) als Anfahrelement ausgebildet ist.

8. Mehrstufengetriebe nach einem der Ansprüche 1 bis 7, **dadurch gekennzeichnet, dass** Anschlüsse (60) zu einer externen Ölversorgung des Getriebes ausschließlich durch eine oder mehrere in der Antriebswelle (51) angeordnete und zur Antriebsseite geführte Bohrungen (61) und zur Abtriebsseite durch eine oder mehrere geführte Bohrungen (62) gebildet sind.

## Claims

1. Multi-stage transmission having two transmission gear sets (1, 2), comprising:
- a first planetary gear set (1) with an inner sun gear (11), inner planet gears (12) which engage with the inner sun gear (11), an inner internal gear (13) which engages with the inner planet gears (12), an outer sun gear (14) which is connected rotationally conjointly to the inner internal gear (13), outer planet gears (15) which engage with the outer sun gear (14), and an outer internal gear (16) which engages with the outer planet gears (15), and a web (17) on which the inner planet gears (12) and the outer planet gears (15) are mounted, and
- a second planetary gear set (2) with a sun gear (21), inner planet gears (22) which engage with the sun gear (21), outer planet gears (23) which mesh with the inner planet gears (22), and an internal gear (24) which engages with the outer planet gears (23), and also a web (25) on which the planet gears (22, 23) are mounted,
- wherein the sun gear (11) of the first planetary gear set (1) can be coupled by way of a first clutch (31) to a drive input (51),
- wherein the internal gear (24) of the second planetary gear set (2) is connected rotationally conjointly to the inner internal gear (13) and to the outer sun gear (14) of the first planetary gear set (1),
**characterized in that**
- the web (25) of the second planetary gear set (2) can be coupled by way of a first brake (41) to the housing (53),
- the sun gear (21) of the second planetary gear set (2) is connected rotationally conjointly to the drive input (51),
- the inner internal gear (13) and the outer sun gear (14) of the first planetary gear set (1) can be coupled by way of a second brake (42) to the housing (53),
- the web (17) of the first planetary gear set (1) can be coupled by way of a third brake (43) to the housing (53),
- the web (17) of the first planetary gear set (1) can be coupled by way of a second clutch (32) to the drive input (51), and
- the outer internal gear (16) of the first planetary gear set (1) is connected rotationally conjointly to a drive output (52).

2. Multi-stage transmission according to Claim 1, **characterized in that** the following gears can be engaged by actuation of the stated elements:
- a first gear by way of first clutch (31) and third brake (43),
- a second gear by way of first clutch (31) and second brake (42),
- a third gear by way of first clutch (31) and first brake (41),
- a fourth gear by way of first clutch (31) and second clutch (32),
- a fifth gear by way of second clutch (32) and first brake (41),
- a sixth gear by way of second clutch (32) and second brake (42), and
- a reverse gear by way of first brake (41) and third brake (43),
wherein the elements not stated in each case are unactuated or open.

3. Multi-stage transmission according to either of Claims 1 and 2, **characterized in that** a spur gear transmission stage (58, 59) is provided at the drive output side.

4. Multi-stage transmission according to one of Claims 1 to 3, **characterized in that** the third brake (43) is in the form of a claw-type brake and the first clutch (31) and the first brake (41) are in the form of friction-type shift elements.

5. Multi-stage transmission according to Claim 4, **characterized in that** the first clutch (31) and the first brake (41) are formed as starting elements.

6. Multi-stage transmission according to one of Claims 1 to 3, **characterized in that** the third brake (43) is in the form of a friction-type shift element and the first clutch (31) is in the form of a claw-type clutch.

7. Multi-stage transmission according to Claim 6, **characterized in that** the third brake (43) is in the form of a starting element.

8. Multi-stage transmission according to one of Claims 1 to 7, **characterized in that** connections (60) to an external oil supply of the transmission are formed exclusively by way of one or more bores (61) arranged in the drive input shaft (51) and led to the drive input side, and to the drive output side by way of one or more led bores (62).

## Revendications

1. Boîte de vitesses à plusieurs étages, avec deux jeux de roues de transmission (1, 2), comprenant :
- un premier train planétaire (1) avec une première roue solaire intérieure (11), avec des satellites intérieurs (12) en prise avec la roue solaire intérieure (11), une couronne dentée intérieure (13) en prise avec les satellites intérieurs (12), une roue solaire extérieure (14) connectée à la couronne dentée intérieure (13) de manière solidaire en rotation, des satellites extérieurs (15) en prise avec la roue solaire extérieure (14), une couronne dentée extérieure (16) en prise avec les satellites extérieurs (15), ainsi qu'un porte-satellites (17) sur lequel sont supportés les satellites intérieurs (12) et les satellites extérieurs (15), et
- un deuxième train planétaire (2) avec une roue solaire (21), des satellites intérieurs (22) en prise avec la roue solaire (21), les satellites extérieurs (23) s'engrenant avec les satellites intérieurs (22) et une couronne dentée (24) en prise avec les satellites extérieurs (23), ainsi qu'un porte-satellites (25) sur lequel sont supportés les satellites (22, 23),
- la roue solaire (11) du premier train planétaire (1) pouvant être accouplée à un entraînement (51) par le biais d'un premier embrayage (31),
- la couronne dentée (24) du deuxième train planétaire (2) étant connectée de manière solidaire en rotation à la couronne dentée intérieure (13) et à la roue solaire extérieure (14) du premier train planétaire (1), **caractérisée en ce que**
- le porte-satellites (25) du deuxième train planétaire (2) peut être accouplé par le biais d'un premier frein (41) au boîtier (53),
- la roue solaire (21) du deuxième train planétaire (2) est connectée de manière solidaire en rotation à l'entraînement (51),
- la couronne dentée intérieure (13) et la roue solaire extérieure (14) du premier train planétaire (1) peuvent être accouplées au boîtier (53) par le biais d'un deuxième frein (42),
- le porte-satellites (17) du premier train planétaire (1) peut être accouplé au boîtier (53) par le biais d'un troisième frein (43),
- le porte-satellites (17) du premier train planétaire (1) peut être accouplé à l'entraînement (51) par le biais d'un deuxième embrayage (32) et
- la couronne dentée extérieure (16) du premier train planétaire (1) est connectée de manière solidaire en rotation à une prise de force (52).

2. Boîte de vitesses à plusieurs étages selon la revendication 1, **caractérisée en ce que** les rapports suivants peuvent être commutés par l'actionnement des éléments indiquées :
- un premier rapport par le premier embrayage (31) et le troisième frein (43),
- un deuxième rapport par le premier embrayage (31) et le deuxième frein (42),
- un troisième rapport par le premier embrayage (31) et le premier frein (41),
- un quatrième rapport par le premier embrayage (31) et le deuxième embrayage (32),
- un cinquième rapport par le deuxième embrayage (32) et le premier frein (41),
- un sixième rapport par le deuxième embrayage (32) et le deuxième frein (42) et
- un rapport de marche arrière par le premier frein (41) et le troisième frein (43),
les éléments respectivement non mentionnés restant non actionnés ou ouverts.

3. Boîte de vitesses à plusieurs étages selon l'une quelconque des revendications 1 ou 2, **caractérisée en ce qu'**il est prévu du côté de la prise de force un étage de boîte de vitesses à pignons droits (58, 59).

4. Boîte de vitesses à plusieurs étages selon l'une quelconque des revendications 1 à 3, **caractérisée en ce que** le troisième frein (43) est réalisé sous forme de frein à griffes et le premier embrayage (31) et le premier frein (41) sont réalisés sous forme d'éléments de commutation à friction.

5. Boîte de vitesses à plusieurs étages selon la revendication 4, **caractérisée en ce que** le premier embrayage (31) et le premier frein (41) sont réalisés sous forme d'éléments de démarrage.

6. Boîte de vitesses à plusieurs étages selon l'une quelconque des revendications 1 à 3, **caractérisée en ce que** le troisième frein (43) est réalisé sous forme d'élément de commutation à friction et le premier embrayage (31) est réalisé sous forme d'embrayage à griffes.

7. Boîte de vitesses à plusieurs étages selon la revendication 6, **caractérisée en ce que** le troisième frein (43) est réalisé sous forme d'élément de démarrage.

8. Boîte de vitesses à plusieurs étages selon l'une quelconque des revendications 1 à 7, **caractérisée en ce que** des raccords (60) à une alimentation externe en huile de la boîte de vitesses sont formés exclusivement par un ou plusieurs alésages (61) disposés dans l'arbre d'entraînement (51) et guidés vers le côté d'entraînement et vers le côté de sortie par un ou plusieurs alésages (62) guidés.
